(19) Europäisches Patentamt
European Patent Office
Office européen des brevets

(11) **EP 1 321 338 B1**

(12) **EUROPÄISCHE PATENTSCHRIFT**

(45) Veröffentlichungstag und Bekanntmachung des Hinweises auf die Patenterteilung:
**30.09.2015 Patentblatt 2015/40**

(51) Int Cl.:
***B60S 1/08*** *(2006.01)*

(21) Anmeldenummer: **02026374.5**

(22) Anmeldetag: **25.11.2002**

(54) **Steuereinrichtung für eine Scheibenwischvorrichtung und Verfahren zum Betreiben einer solchen Steuereinrichtung**

Control device for a windscreen wiper apparatus and method for operating such a control device

Dispositif de contrôle d'un appareil d'essuie-glace et méthode pour faire fonctionner ce dispositif de contrôle

(84) Benannte Vertragsstaaten:
**DE ES FR GB IT SE**

(30) Priorität: **19.12.2001 DE 10162677**
**29.10.2002 DE 10250322**

(43) Veröffentlichungstag der Anmeldung:
**25.06.2003 Patentblatt 2003/26**

(73) Patentinhaber: **ROBERT BOSCH GMBH**
**70442 Stuttgart (DE)**

(72) Erfinder:
• **Moosmann, Johannes**
**77830 Buehlertal (DE)**
• **Krueger, Hartmut**
**77830 Buehlertal (DE)**

(56) Entgegenhaltungen:
**EP-A- 1 300 304      WO-A-03/051694**
**DE-A- 19 741 629      US-A- 5 757 155**
**US-A- 6 150 783**

EP 1 321 338 B1

**Beschreibung**

Die Erfindung betrifft eine Steuereinrichtung für eine Scheibenwischvorrichtung mit arbeitspunktabhängiger Wischwinkeladaption und ein Verfahren zum Betreiben einer solchen Steuereinrichtung.

Scheibenwischvorrichtungen von Kraftfahrzeugen können zur Optimierung ihrer Betriebseigenschaften elektronisch geregelt sein. Damit Wischarme der geregelten Scheibenwischvorrichtungen einen gewünschten Verlauf auf der Scheibe des Kraftfahrzeugs aufweisen, wird ein bestimmter Sollverlauf (Solltrajektorie) vorgegeben, der üblicherweise in einem Steuergerät der Scheibenwischvorrichtung gespeichert ist. Für unterschiedliche Wischgeschwindigkeiten des Wischarms werden unterschiedliche, den jeweiligen Wischgeschwindigkeiten angepaßte Sollverläufe vorgesehen. Üblicherweise ist diese Anpassung derart, dass für hohe Wischgeschwindigkeiten eine Umkehrlage des Wischarms im Vergleich zur Umkehrlage bei niedrigen Wischgeschwindigkeiten reduziert ist.

Hohe Wischgeschwindigkeiten bewirken ein reduziertes Reibungsmoment zwischen Scheibe und Wischarm, was sich in einer erhöhten Wischgeschwindigkeit des Wischarms auswirkt. Durch die vorgenannte Anpassung des Sollverlaufs soll erreicht werden, dass Überschwingungen der Wischarme über die Umkehrlagen kompensiert werden, um ein Anschlagen der Wischarme an den A-Säulen des Kraftfahrzeuges zu verhindern.

Abhängig von unterschiedlichen Betriebsbedingungen treten Abweichungen vom gewünschten Wischwinkel auf. Diese Abweichungen resultieren in einem Überwischen bzw. einem nicht ausreichenden Auswischen des gewünschten Wischfeldes. Es entsteht dadurch in den Umkehrlagen ein keilförmiger Bereich, der manchmal gewischt wird und manchmal nicht. Dieser kann insbesondere bei langen Wischarmen groß sein und optisch störend wirken. Ferner bewirken die durch das ungleichmässige Wischen bedingten unterschiedlich großen Wischfelder eine merkliche Komforteinbuße beim Wischen. Schließlich muß der keilförmige Bereich bei einer Toleranzrechnung für das Wischfeld berücksichtigt werden.

Im Stand der Technik sind Steuereinrichtungen und Verfahren zum Anpassen von Wischarmverläufen von Scheibenwischvorrichtungen bekannt, mit denen unter Einbeziehung von Informationen über eine eingetretene Stellgrößenbegrenzung die Solltrajektorie des Wischarms verändert werden kann. Eine derartige Technik offenbart beispielsweise die gattungsbildende EP 0 700 342 B1, in der eine Veränderung der Solltrajektorie mit Hilfe eines herkömmlichen regelungstechnischen Verfahrens gezeigt ist.

Erläuterungen zur Zustandsschätzung mittels Zustandsbeobachter finden sich im Lehrbuch von Gerd Schulz "Regelungstechnik" (Oldenbourg Verlag München Wien, ISBN 3-486-25858-3) auf den Seiten 121ff.

Aus der US 6,150,783 ist eine Steuereinrichtung bzw. ein Verfahren bekannt, bei dem, zur Einhaltung der Sollumkehrlagen trotz auf den Wischer einwirkender äußerer Störungen, eine Anpassung der Positions-Sollwertkurve Xsoll(t) erfolgt. Auf einer ersten Systemebene wird der Wischverlauf geregelt, indem Xsoll(t) vorgegeben, mit Xist verglichen und dann der Motor entsprechend nachgeregelt wird. Dann wird die - jetzt durch eine äußere Störung hervorgerufene - Abweichung zwischen Xist und Xsoll wieder verwendet, diesmal jedoch nicht für die normale Regelung, sondern, nach mathematischer Auswertung, für die Bestimmung einer korrigierten Xsoll,korr

Kurve, die die Anpassung an die Störung bewirkt. Das bekannte Verfahren korrigiert demnach die Abweichung durch Störung, indem, auf einer höheren Systemebene, eine Nachregelung stattfindet. Die erforderliche Trennung der Systemebenen wird durch eine Zeithierarchie realisiert, bei der die am Anfang eines halben Wischzyklus (also in der ersten Wischfeldhälfte) festgestellte Abweichung durch Störung zur Anpassung des Positions-Sollverlaufs in der zweiten Wischfeldhälfte benützt wird. Die bekannte Regelung kann nicht auf kurz vor den Sollumkehrlagen auftretende Störungen des Wischers (Lastmomente) reagieren.

Die EP 1300 304 A2 offenbart ein Verfahren zur Reduzierung von Ratterschwingungen in einer Scheibenwischeranlage mit einem mathematischen Modell und mit einem Zustandsbeobachter. Diese Modelle werden zur Durchführung eines Regelverfahrens eingesetzt. Ziel dieser Regelung ist, dass das System nur dem Sollverlauf gut folgen soll, ohne dass eine Änderung des Sollverlaufs selbst ins Auge gefasst wird.

Eine Einrichtung und ein Verfahren mit den Merkmalen des Oberbegriffs des Anspruchs 1 bzw.

Anspruchs 8 ist aus dem Dokument US5757155 bekannt.

Es ist die Aufgabe der vorliegenden Erfindung, eine Steuereinrichtung für eine Scheibenwischvorrichtung und ein entsprechendes Verfahren bereitzustellen, die verbessert auf sich ändernde Wischbedingungen reagieren.

Die Aufgabe wird erfindungsgemäß durch eine Steuereinrichtung mit den Merkmalen gemäß Anspruch 1 und ein Verfahren mit den Merkmalen gemäß Anspruch 8 gelöst.

Weitere vorteilhafte Ausgestaltungen der Erfindung sind in den abhängigen Ansprüchen angegeben.

Erfindungsgemäß ist zum Steuern einer Wischereinrichtung einer Scheibenwischvorrichtung, insbesondere eines Kraftfahrzeugs, vorgesehen, dass eine Steuereinrichtung der Wischereinrichtung eine Anpassung eines Sollverlaufs des Wischwinkels vornimmt. Die Anpassung erfolgt mit Hilfe eines beobachtergestützten Verfahrens, das aktuelle am Wischarm herrschende Arbeitspunkte ermittelt. Auf diese Art und Weise kann sowohl das Überwischen als auch ein zu geringes Auswischen des Wischfeldes reduziert bzw. verhindert werden, so dass die Genauigkeiten des Wischens der Wischarme vor allem in den Umkehrlagen vorteilhafterweise erhöht sind.

Vorteilhafterweise kann sich der Sollverlauf des Wischwinkels gut an sich ändernde Wischbedingungen auf der Scheibe anpassen. Zur erfindungsgemäßen Anpassung des Sollverlaufs des Wischwinkels an den vorherrschenden Arbeitspunkt wird keinerlei zusätzliche Sensorik benötigt. Dies spart Entwicklungs- und Fertigungsaufwand und damit verbundene Kosten. Weiterhin kann durch die Anpassung des Wischwinkels an den aktuellen Arbeitspunkt des Wischarms eine Reproduzierbarkeit des Wischwinkels, vor allem in den Umkehrlagen, in vorteilhafter Weise erhöht sein.

Günstigerweise ist es vorgesehen, die erfindungsgemäße Steuereinrichtung mit dem entsprechenden Verfahren während jedes Wischzyklusses des Wischarms zu betreiben, wobei ein einzelner Wischzyklus einen vollständigen Bewegungsablauf des Wischarms zwischen zwei Sollumkehrlagen (Obere und untere Umkehrlage) auf der Scheibe definiert.

Laut der Erfindung ist es vorgesehen, dass in der erfindungsgemässen Steuereinrichtung dynamische Eigenschaften der Scheibenwischvorrichtung anhand eines mathematischen Streckenmodells abgelegt sind. Im Streckenmodell sind Charakteristiken eines Elektromotors, sowie Elastizitäten und Trägheitsmomente der Scheibenwischvorrichtung formuliert.

Vorzugsweise ist es möglich, das üblicherweise nicht messbare Lastmoment auf den Wischarm als Störgröße zu definieren, die über ein mathematisches Störmodell auf das Streckenmodell wirkt.

Mit Hilfe eines Zustandsbeobachters wird das aktuell auf jeden Wischarm wirkende Lastmoment mittels eines Schätzprozesses bestimmt. Mit Hilfe zusätzlicher Sensorik oder durch eine Filterung bereits bekannter Meßgrößen können weitere Zustandsgrössen des Streckenmodells, wie z.B. eine Wischarmbeschleunigung oder ein vom Elektromotor aufgenommener elektrischer Strom bestimmt werden.

Dadurch ist zusammen mit den vorn Zustandsbeobachter ermittelten Grössen Lastmoment auf den Wischarm und Wischgeschwindigkeit (Wischwinkelgeschwindigkeit) somit der Arbeitspunkt, in dem sich der Wischarm aktuell befindet, gut bekannt. Daraus resultierend wird mit Hilfe einer Einrichtung zur Adaption eines Sollverlaufs des Wischwinkels das Lastmoment auf den Wischarm bewertet und ein Sollverlauf eines Wischwinkels bzw. Sollumkehrlagen des Wischarms an den ermittelten Arbeitspunkt angepasst.

Weiterhin ist es vorzugsweise vorgesehen, dass als Eingangsgröße für den Zustandsbeobachter verschiedene, meßtechnisch ermittelte und signalverarbeitungsmässig aufbereitete Signale verwendbar sind. Dazu zählen eine Eingangsspannung oder ein Eingangsstrom des Elektromotors der Wischereinrichtung und ein gemessenes Ausgangssignal der Wischereinrichtung, beispielsweise ein Drehwinkel nach dem Elektromotor oder nach einem Übersetzungsgetriebe.

Bevorzugte Ausführungsformen der Erfindung werden im Folgenden anhand der beigefügten Zeichnungen näher erläutert. Dabei zeigt:

Fig. 1 eine Scheibenwischanlage mit einer Wischereinrichtung und einer erfindungsgemäßen Steuereinrichtung;

Fig. 2 ein prinzipielles signalflussorientiertes Blockschaltbild mit der erfindungsgemäßen Steuereinrichtung und der Wischereinrichtung; und

Fig. 3 eine Prinzipdarstellung eines erweiterten mathematischen Streckenmodells der Scheibenwischvorrichtung, bestehend aus einem mathematischen Streckenmodell und einem mathematischen Störmodell.

Die Erfindung wird nachfolgend anhand der Figuren detailliert beschrieben.

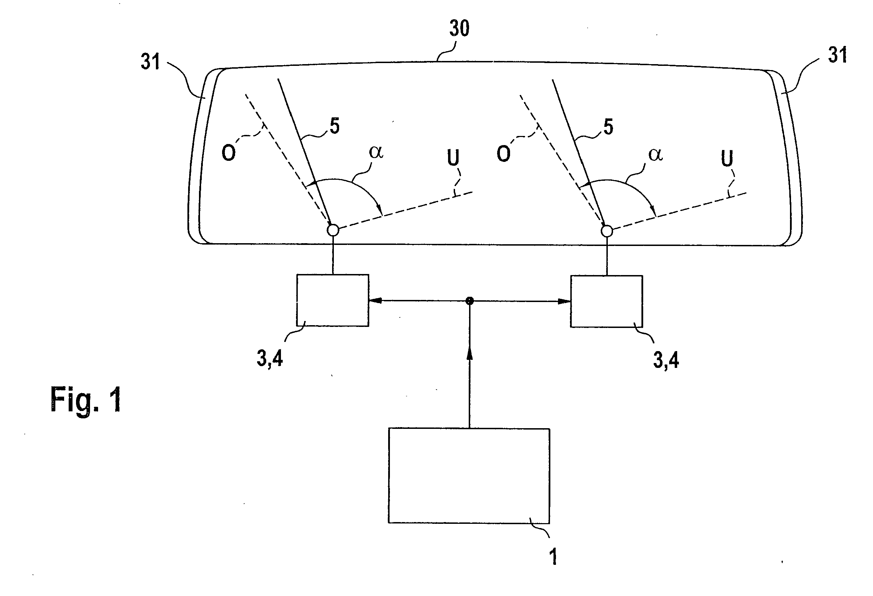

Fig. 1 zeigt eine schematische Darstellung einer Scheibenwischvorrichtung eines Kraftfahrzeugs, bei der eine erfindungsgemäße Steuereinrichtung 1 eingesetzt wird. Die Steuereinrichtung 1 ist mit zwei Anordnungen, die jeweils einen Elektromotor 3 und ein Getriebe 4 umfassen, verbunden und kann beispielsweise auch als eine einzige Einheit mit dem beziehungweise den Motore aufgebaut sein. Jede dieser beiden Anordnungen dient zur Ansteuerung eines Wischarms 5. Die beiden Wischarme 5 überstreichen beim Wischen auf einer Scheibe 30 jeweils einen Wischwinkel $\alpha$, der durch zwei Sollumkehrlagen O und U festgelegt ist. Dabei definiert O eine obere Sollumkehrlage und U eine untere Sollumkehrlage des Wischarms. Zwei A-Säulen 31 begrenzen die Scheibe 30 an ihren seitlichen Enden.

Das auf den Wischarm 5 während des Wischens wirkende Lastmoment setzt sich aus statischen und dynamischen Anteilen, wie z.B. Reibungs- und Windlastanteilen zusammen. Dieses Lastmoment ist in maßgeblicher Weise für die Genauigkeit des Wischens, vor allem in den Sollumkehrlagen verantwortlich. Insbesondere können abrupte Schwankungen des Lastmoments kurz vor den Sollumkehrlagen O und U die Einhaltung des Wischwinkels $\alpha$, insbesondere der Sollumkehrlagen, und damit die Einhaltung einer Größe des Wischfeldes erheblich beeinträchtigen.

Bei bekannten Regelungen resultiert dieses Problem unter anderem daher, dass die Regelungen auf Schwankungen des Lastmoments nur verzögert reagieren. Eine derartige Schwankung des Lastmoments kann beispielsweise bei einem Wischen auf einer abtrocknenden Scheibe auftreten, bei der im Verlauf des Abtrocknens ein dünner Wasserfilm am Rand stehengeblieben ist. Dies führt in der Regel zu einem Überschwingen des Wischarms über die gewünschte Sollumkehrlage hinaus. Andererseits führt eine Lastzunahme, die beispielsweise aus einer Schnee- oder Eislast auf der Scheibe 30 herrührt dazu, dass der Wischarm 5 die Sollumkehrlagen nicht mehr ganz erreicht. Die Lastmomentschwankungen auf den Wischarm resultieren also letztendlich in einem unerwünschten Abweichen vom gewünschten Sollverlauf des Wischarms bzw. Wischwinkels. Die Umkehrlagen des Wischarms sind bei bekannten Regelungen also nachteilig von Betriebsbedingungen abhängig. Eine Reproduzierbarkeit des Wischwinkels bzw. Wischfeldes ist bei konventionellen Regelungen somit in ungünstiger Weise verschlechtert.

Erfindungsgemäß wird während des Wischens das auf den Wischarm 5 wirkende Lastmoment mit Hilfe eines beobachtergestützten Verfahrens ermittelt. Das ermittelte Lastmoment und Änderungen desselben werden mindestens kurz vor den Sollumkehrlagen O und U bewertet. Aufgrund der Bewertung wird die Sollumkehrlage entweder in Richtung der A-Säule 31 oder in Richtung der Scheibenmitte verschoben. Ein Betrag, um den diese Verschiebung vorgenommen wird, ist abhängig vom Arbeitspunkt, in dem sich der Wischarm 5 aktuell befindet. Der Arbeitspunkt ist durch das Lastmoment und/oder die aktuelle Lastmomentänderung und den aktuellen Wischwinkel (Ist-Wischwinkel) und/oder die aktuelle Wischgeschwindigkeit des Wischarms bestimmt.

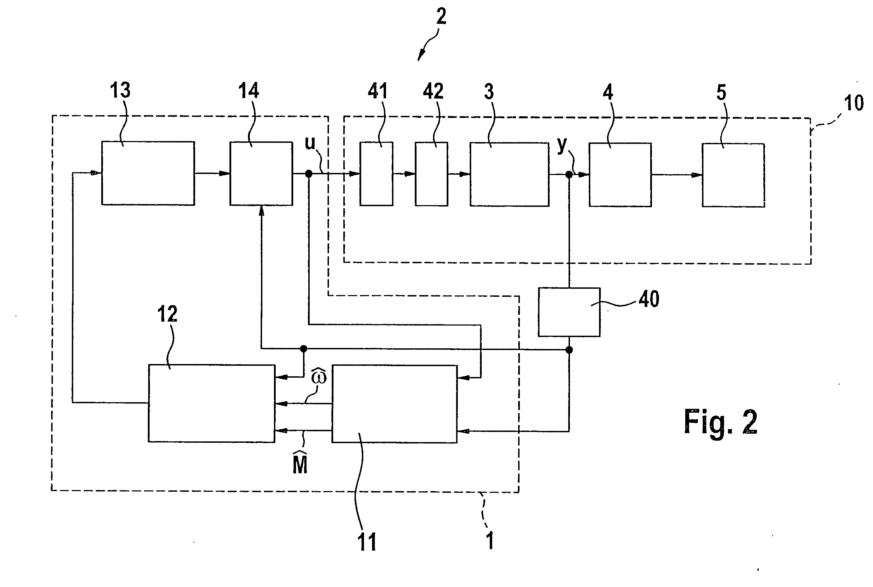

Fig. 2 zeigt in Form eines signalflussorientierten Blockschaltbildes die erfindungsgemäße Steuereinrichtung 1, die mit einer Wischereinrichtung 10 verbunden ist und diese ansteuert. Die Steuereinrichtung 1 und die Wischereinrichtung 10 bilden zusammen die Scheibenwischvorrichtung 2. Die Wischereinrichtung 10 umfaßt einen Elektromotor 3, ein Getriebe 4 und den Wischarm 5. Der Elektromotor 3 ist über das Getriebe 4 mit dem Wischarm 5 verbunden und steuert diesen an.

Die Steuereinrichtung 1 umfaßt einen Zustandsbeobachter 11, eine erste Einrichtung 12 zur Adaption des Wischwinkels, eine zweite Einrichtung 13 zur Anpassung einer Solltrajektorie des Wischerarms und eine Reglereinrichtung 14. Dem Zustandsbeobachter 11 wird ein Stellgrößensignal u, beispielsweise ein Spannungssignal für den Elektromotor sowie ein nach dem Elektromotor gemessenes und von einer ersten Signalverarbeitungseinrichtung 40 analog-digital gewandeltes Ausgangsgrößensignal y, beispielsweise ein Drehwinkelsignal, zugeführt. Der Zustandsbeobachter 11 ermittelt aus den zugeführten Signalen aufgrund eines Schätzprozesses Werte eines geschätzten Lastmoments $\hat{M}$ und einer geschätzten Wischwinkelgeschwindigzeit $\hat{\omega}$ und liefert das geschätzte Lastmoment $\hat{M}$ und die geschätzte Wischwinkelgeschwindigkeit $\hat{\omega}$ an die erste Einrichtung 12. Der ersten Einrichtung 12 wird ferner das Ausgangssignal y des Elektromotors 3 zugeführt. Aus den Grössen, die der ersten Einrichtung 12 zugeführt werden, bestimmt die erste Einrichtung 12 den Arbeitspunkt des Wischarms 5 zu jedem Zeitpunkt des Wischens.

Die erste Einrichtung 12 bewertet das vom Zustandsbeobachter 11 zugeführte Lastmoment und variiert aufgrund dieser Bewertung die Sollumkehrlagen des Wischarms, die bei konstantem Lastmoment auf den Wischarm normalerweise fix sind. Bei auftretenden Schwankungen des Lastmomentes kurz vor den Sollumkehrlagen wird die Sollumkehrlage kompensatorisch entweder in Richtung A-Säule 31 oder in Richtung Scheibenmitte verschoben. Eine entsprechende Abhängigkeit von Arbeitspunkt und Verschiebung der Sollumkehrlage (Veränderung eines Sollverlaufs des Wischwinkels) ist in der ersten Einrichtung 12 in tabellarischer Form abgelegt.

Die erste Einrichtung 12 ist mit der zweiten Einrichtung 13 verbunden. In der zweiten Einrichtung 13 ist ein Sollverlauf des Wischwinkels über der Zeit abgelegt. In der zweiten Einrichtung 13 wird der Sollverlauf des Wischwinkels von der ersten Einrichtung 12 angepasst.

Die zweite Einrichtung 13 ist mit der Reglereinrichtung 14 verbunden und liefert an die Reglereinrichtung 14 eine Führungsgrösse für den Wischwinkel. Die Reglereinrichtung 14 liefert als Ausgangsgröße ein angepasstes bzw. optimiertes Stellgrößensignal u über eine zweite Signalverarbeitungseinrichtung 41 und eine Ansteuerelektronik 42 an den Elektromotor 3.

Als Eingangssignale für den Zustandsbeobachter 11 können ausser der elektrischen Steuerspannung für den Elektromotor und dem gemessenen Drehwinkel in Abhängigkeit von vorhandener Sensorik auch andere Signale, wie z.B. ein Drehzahl- oder ein Stromsignal verwendet werden. Anstelle des nach dem Elektromotor 3 ermittelten Drehwinkelsignals kann auch ein nach dem Getriebe 4 ermitteltes Drehwinkelsignal herangezogen werden.

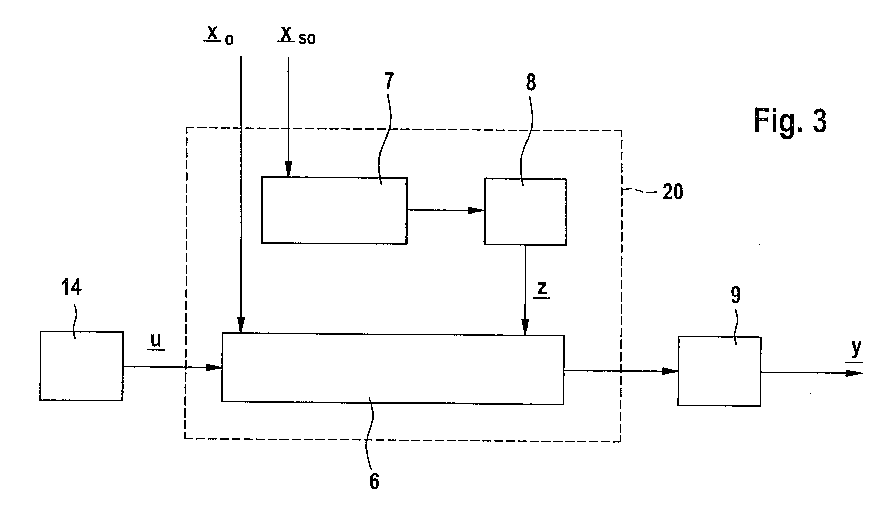

In Fig. 3 ist schematisch ein mathematisches Streckenmodell der Scheibenwischvorrichtung 2, das in der Steuereinrichtung 1 abgelegt ist, dargestellt. In dem Streckenmodell 6 sind wesentliche dynamische Eigenschaften der Scheibenwischvorrichtung 2 formuliert. Dies bedeutet, dass Charakteristiken des Elektromotors 3, Elastizitäten des Getriebes 4 und des Wischarms 5 sowie deren Trägheitsmomente berücksichtigt werden können.

Das üblicherweise nicht messbare, auf den Wischarm 5 wirkende Lastmoment wird als eine Störgröße z eines Störmodells 7 eingeführt, wobei die Störgröße z über eine Ausgangsmatrix 8 auf das Streckenmodell 6 wirkt. Eine Kombination aus dem Streckenmodell 6, dem Störmodell 7 und der Ausgangsmatrix 8 ergibt ein erweitertes Streckenmodell 20. Eine Ausgangsmatrix 9 des erweiterten Streckenmodells liefert die Meßgröße y.

Das mathematische Streckenmodell der Wischereinrichtung 10 kann vorzugsweise durch folgende mathematische Beziehungen beschrieben werden:

Zustandsdifferentialgleichung:

$$\dot{x}_M = \underline{A}_M \, \underline{x} \; + \; \underline{B}_M \cdot \underline{u} + \underline{E} \, \underline{z}$$

Gleichung für die Meßgröße:

$$\underline{y} \; = \; \underline{C}_M \; \underline{x}_M$$

Das Störmodell kann folgendermaßen dargestellt werden:

$$\dot{\underline{x}}_S = \underline{A}_S \, \underline{x}_S, \quad \underline{z} \; = \; \underline{C}_S \, \underline{x}_S$$

Die einzelnen Parameter des Strecken- und des Störmodells haben dabei folgende Bedeutung:

| | |
|---|---|
| $\underline{x}_M$ | Zustandsgröße des Streckenmodells |
| $\underline{x}_0$ | Anfangswert der Zustandsgröße des Streckenmodells |
| $\underline{x}_S$ | Zustandsgröße des Störmodells |
| $\underline{x}_{S0}$ | Anfangswert der Zustandsgröße des Störmodells |
| $\underline{u}$ | Stellgröße |
| $\underline{A}_M$ | Dynamikmatrix des Streckenmodells |
| $\underline{B}_M$ | Eingangsmatrix des Streckenmodells |
| $\underline{C}_M$ | Ausgangsmatrix des Streckenmodells |
| $\underline{A}_S$ | Dynamikmatrix des Störmodells |
| $\underline{E}$ | Matrix, über die die Störgröße $\underline{z}$ auf das Streckenmodell wirkt |
| $\underline{y}$ | Ausgangsgröße |
| $\underline{z}$ | Störgröße |

Die Kombination aus Streckenmodell und Störmodell ergibt das erweiterte Streckenmodell 20, das folgendermaßen beschrieben werden kann:

$$\underbrace{\begin{bmatrix} \dot{x}_M \\ \dot{x}_S \end{bmatrix}}_{\dot{\underline{x}}} = \underbrace{\begin{bmatrix} \underline{A}_M & \underline{E}\underline{C}_S \\ 0 & \underline{A}_S \end{bmatrix}}_{\underline{A}} \underbrace{\begin{bmatrix} \underline{x}_M \\ \underline{x}_S \end{bmatrix}}_{\underline{\phantom{x}}} + \underbrace{\begin{bmatrix} \underline{B}_M \\ 0 \end{bmatrix}}_{\underline{B}} \underline{u}$$

$$\underline{y} \; = \; \underbrace{\begin{bmatrix} \underline{C}_M & 0 \end{bmatrix}}_{\underline{C}} \begin{bmatrix} \underline{x}_M \\ \underline{x}_S \end{bmatrix}$$

Mit Hilfe des Zustandsbeobachters 11 (z.B. Luenbergerbeobachter oder Kalmanfilter), der vorzugsweise folgendermaßen dargestellt werden kann:

$$\dot{\hat{\underline{x}}} \; = \; (\,\underline{A} \; - \; \underline{L}\,\underline{C}\,)\,\hat{\underline{x}} \; + \; \underline{B}\,\underline{u} \; + \; \underline{L}\,\underline{y}$$

$$\hat{\underline{y}}_B \; = \; \underline{C}_B\hat{\underline{x}} \; + \; \underline{D}_B\underline{u}$$

können Zustandsgrößen des erweiterten Streckenmodells 20 geschätzt werden. Dabei ist $\underline{L}$ eine im Entwurfsprozess des Zustandsbeobachters zu definierende Größe. Bei geeigneter Formulierung der Beobachtermatrizen $\underline{C}_B$ und $\underline{D}_B$ steht neben der gemessenen Ausgangsgrösse (z.B. Drehwinkel) unter anderem das Lastmoment, das auf den Wischarm 5 wirkt, als Ausgangsgröße $\hat{\underline{y}}_B$ des Zustandsbeobachters 11 zur Verfügung.

Die erfindungsgemäße Steuereinrichtung kann sowohl zur Steuerung eines einzelnen Wischarms 5 als auch zur Steuerung von mehreren Wischarmen der Scheibenwischvorrichtung eingesetzt werden.

Ferner ist es möglich, die erfindungsgemäße Steuereinrichtung auch für mehrere Scheibenwischvorrichtungen einzusetzen.

Weiterhin ist es möglich, die erfindungsgemäße Steuereinrichtung mit dem entsprechenden Verfahren während beliebig bestimmbarer Wischzyklen während des Wischens des Wischarms einzusetzen.

## Patentansprüche

1. Steuereinrichtung für eine Wischereinrichtung (10) einer Scheibenwischvorrichtung (2), insbesondere eines Kraftfahrzeugs, wobei die Steuereinrichtung (1) zum Steuern einer zyklischen Pendelbarkeit zumindest eines Wischarms (5) der Wischereinrichtung (10) innerhalb eines von zwei Umkehrlagen (O,U) bestimmten Wischwinkels ($\alpha$) ausgebildet ist, und wobei die Steuereinrichtung (1) mittels eines beobachtergestützten Verfahrens eine Anpassung eines Sollverlaufs des Wischarms (5) vornimmt,

   • wobei in der Steuereinrichtung (1) ein mathematisches Streckenmodell (6) abgelegt ist, in dem dynamische Eigenschaften der Wischereinrichtung (10) formuliert sind und in dem ein Lastmoment des Wischarms (5) als eine Störgröße definiert ist,
   • wobei ein Zustandsbeobachter (11) vorgesehen ist, der mittels des Streckenmodells (6) ein geschätztes aktuelles Lastmoment des Wischarms (5) ermittelt, **dadurch gekennzeichnet, dass**
   • das ermittelte geschätzte Lastmoment und Änderungen desselben mindestens kurz vor den Sollumkehrlagen (O, U) bewertet werden und aufgrund der Bewertung die Sollumkehrlage (O, U) entweder in Richtung einer A-Säule (31) oder in Richtung einer Scheibenmitte verschoben wird, wobei ein Betrag, um den die Verschiebung vorgenommen wird, abhängig von einem Arbeitspunkt ist, in dem sich der Wischarm (5) aktuell befindet.

2. Steuereinrichtung nach Anspruch 1, **dadurch gekennzeichnet, dass** ein Streckenmodell (6) durch folgende Beziehung darstellbar ist:

$$\dot{\underline{x}}_\mathrm{M} = \underline{A}_\mathrm{M}\,\underline{x} + \underline{B}_\mathrm{M}\,\underline{u} + \underline{E}\,\underline{z}$$

   wobei $\underline{A}_\mathrm{M}$ eine Dynamikmatrix des Streckenmodells (6), $\underline{B}_\mathrm{M}$ eine Eingangsmatrix des Streckenmodells (6) und $\underline{E}$ eine Matrix, über die die Störgröße auf das Streckenmodell (6) wirkt, definiert.

3. Steuereinrichtung nach Anspruch 1 oder 2, **dadurch gekennzeichnet, dass** in der Steuereinrichtung (1) ein Störmodell (7) formuliert ist, welches auf das Streckenmodell (6) wirkt.

4. Steuereinrichtung nach Anspruch 3, **dadurch gekennzeichnet, dass** das Störmodell (7) durch folgende Beziehung beschreibbar ist:

$$\dot{\underline{x}}_\mathrm{S} = \underline{A}_\mathrm{S}\,\underline{x}_\mathrm{S}, \quad \underline{z} = \underline{C}_\mathrm{S}\,\underline{x}_\mathrm{S}$$

   wobei $\underline{A}_\mathrm{S}$ eine Dynamikmatrix des Störmodells (7), $\underline{C}_\mathrm{S}$ eine Ausgangsmatrix des Störmodells (7) und $\underline{z}$ die Störgröße darstellt.

5. Steuereinrichtung nach einem der vorhergehenden Ansprüche, **dadurch gekennzeichnet, dass** der Zustandsbeobachter (11) durch folgende mathematische Beziehung beschreibbar ist:

$$\dot{\hat{\underline{x}}} = (\underline{A} - \underline{L}\,\underline{C})\,\hat{\underline{x}} + \underline{B}\,\underline{u} + \underline{L}\,\underline{y}$$

$$\hat{\underline{y}}_B = \underline{C}_B\,\hat{\underline{x}} + \underline{D}_B\,\underline{u}$$

wobei $\underline{L}$ eine in einem Entwurfsprozess zu definierende Größe und $\underline{u}$ eine Eingangsgröße des Zustandsbeobachters (11) ist.

6. Steuereinrichtung nach Anspruch 5, **dadurch gekennzeichnet, dass** als Eingangsgrößen für den Zustandsbeobachter (11) eine Steuerspannung oder ein Eingangsstrom und/oder ein Drehwinkel der Wischereinrichtung (10) verwendet wird.

7. Scheibenwischvorrichtung, insbesondere für ein Kraftfahrzeug, mit einer Wischereinrichtung (10) und einer Steuereinrichtung (1) nach einem der Ansprüche 1 bis 6.

8. Verfahren zum Regeln einer Wischereinrichtung (10) einer Scheibenwischvorrichtung (2), insbesondere eines Kraftfahrzeuges, wobei ein Wischarm (5) der Wischereinrichtung (10) innerhalb eines von zwei Umkehrlagen (O,U) bestimmten Wischwinkels ($\alpha$) pendelt, und wobei eine Steuereinrichtung (1) mittels eines beobachtergestützten Verfahrens eine Anpassung eines Sollverlaufs des Wischarms (5) vornimmt, wobei

• in der Steuereinrichtung (1) ein mathematisches Streckenmodell (6) abgelegt ist, in dem dynamische Eigenschaften der Wischereinrichtung (10) formuliert sind und in dem ein Lastmoment des Wischarms (5) als eine Störgröße definiert ist,
• wobei ein Zustandsbeobachter (11) vorgesehen ist, der mittels des Streckenmodells (6) ein geschätztes aktuelles Lastmoment des Wischarms (5) ermittelt, **dadurch gekennzeichnet, dass**
• das ermittelte geschätzte Lastmoment und Änderungen desselben mindestens kurz vor den Sollumkehrlagen (O, U) bewertet werden und aufgrund der Bewertung die Sollumkehrlage (O, U) entweder in Richtung einer A-Säule (31) oder in Richtung einer Scheibenmitte verschoben wird, wobei ein Betrag, um den diese Verschiebung vorgenommen wird, abhängig von einem im Arbeitspunkt ist, in dem sich der Wischarm (5) aktuell befindet.

9. Verfahren nach Anspruch 8, **dadurch gekennzeichnet, dass** ein Streckenmodell (6) verwendet wird, das dynamische Eigenschaften, Elastizitäten und Trägheitsmomente der Wischereinrichtung (10) berücksichtigt.

10. Verfahren nach Anspruch 9, **dadurch gekennzeichnet, dass** im Streckenmodell (6) ein Störmodell (7) verwendet wird, das ein auf den Wischarm (5) wirkendes Lastmoment als eine Störgröße verwendet.

11. Verfahren nach Anspruch 10, **dadurch gekennzeichnet, dass** das Lastmoment aus einem Ansteuersignal (u) für die Wischereinrichtung (10) und einem Ausgangssignal (y) der Wischereinrichtung (10) ermittelt wird.

12. Verfahren nach Anspruch 11, **dadurch gekennzeichnet, dass** das Ansteuersignal (u) ein Spannungs- oder Stromsignal und das Ausgangssignal (y) ein Drehwinkelsignal ist.

13. Verfahren nach einem der Ansprüche 8 bis 12, **dadurch gekennzeichnet, dass** das Streckenmodell (6) durch folgende Beziehung beschrieben werden kann:

$$\dot{\underline{x}}_M = \underline{A}_M\,\underline{x} + \underline{B}_M\,\underline{u} + \underline{E}\,\underline{z}$$

wobei $\underline{A}_M$ eine Dynamikmatrix des Streckenmodells (6), $\underline{B}_M$ eine Eingangsmatrix des Streckenmodells (6) und $\underline{E}$ eine Matrix, über die die Störgröße auf das Streckenmodell (6) wirkt, definiert.

14. Verfahren nach einem der Ansprüche 10 bis 13, **dadurch gekennzeichnet, dass** das Störmodell (7) durch folgendes Gleichungssystem beschrieben werden kann:

$$\dot{\underline{x}}_S = \underline{A}_S \, \underline{x}_S$$

$$\underline{z} = \underline{C}_S \, \underline{x}_S$$

wobei $\underline{A}_S$ eine Dynamikmatrix des Störmodells (7), $\underline{C}_S$ eine Ausgangsmatrix des Störmodells (7) und $\underline{z}$ die Störgröße definiert.

**15.** Verfahren nach einem der vorhergehenden Ansprüche, **dadurch gekennzeichnet, dass** der Zustandsbeobachter (11) durch folgendes Gleichungssystem beschrieben werden kann:

$$\dot{\hat{\underline{x}}} = (\underline{A} - \underline{L}\,\underline{C})\hat{\underline{x}} + \underline{B}\,\underline{u} + \underline{L}\,\underline{y}$$

$$\hat{\underline{y}}_B = \underline{C}_B \hat{\underline{x}} + \underline{D}_B \underline{u}$$

wobei $\underline{L}$ eine in einem Entwurfsprozess zu definierende Größe und $\underline{u}$ eine Eingangsgröße des Zustandsbeobachters (11) ist.

**16.** Verfahren nach Anspruch 15, **dadurch gekennzeichnet, dass** als Zustandsgrösse des Streckenmodells (6) eine Drehzahl, und/oder eine Wischarmbeschleunigung und/oder ein Eingangsstrom des Elektromotors verwendet werden können.

**Claims**

**1.** Control device for a wiper device (10) of a windscreen wiping apparatus (2), in particular of a motor vehicle, the control device (1) being designed for controlling a cyclic oscillation capability of at least one wiping arm (5) of the wiper device (10) within a wiping angle ($\alpha$) determined by two reversal positions (0, U), and the control device (1) undertaking to adjust a desired profile of the wiping arm (5) by means of an observer-based method,

  • there being stored in the control device (1) a mathematical system model (6) in which dynamic properties of the wiper device (10) are formulated, and in which a load torque of the wiping arm (5) is defined as a disturbance variable,
  • there being provided a state observer (11) which determines an estimated current load torque of the wiping arm (5) by means of the system model (6), **characterized in that**
  • the determined estimated load torque and changes in the same are evaluated at least shortly before the desired reversal positions (0, U), and on the basis of the evaluation the desired reversal position (0, U) is displaced either in the direction of a A-column (31) or in the direction of the middle of a windscreen, an amount by which the displacement is undertaken being dependent on a working point at which the wiping arm (5) is currently located.

**2.** Control device according to Claim 1, **characterized in that** a system model (6) can be represented by the following relationship:

$$\dot{\underline{x}}_M = \underline{A}_M \, \underline{x} + \underline{B}_M \, \underline{u} + \underline{E} \, \underline{z}$$

,

$\underline{A}_M$ defining a dynamic matrix of the system model (6), $\underline{B}_M$ defining an input matrix of the system model (6), and $\underline{E}$

defining a matrix via which the disturbance variable acts on the system model (6).

3. Control device according to Claim 1 or 2, **characterized in that** a disturbance model (7) which acts on the system model (6) is formulated in the control device (1).

4. Control device according to Claim 3, **characterized in that** the disturbance model (7) can be described by the following relationship:

$$\dot{\underline{x}}_s = \underline{A}_s \, \underline{x}_s, \quad \underline{z} = \underline{C}_s \, \underline{x}_s \quad ,$$

$\underline{A}_s$ representing a dynamic matrix of the disturbance model (7), $\underline{C}_s$ representing an output matrix of the disturbance model (7), and $\underline{z}$ representing the disturbance variable.

5. Control device according to one of the preceding claims, **characterized in that** the state observer (11) can be described by the following mathematical relationship:

$$\dot{\hat{x}} = (\underline{A} - \underline{L}\,\underline{C})\hat{x} + \underline{B}\,\underline{u} + \underline{L}\,\underline{y}$$

$$\underline{\hat{y}}_B = \underline{C}_B \, \hat{\underline{x}} + \underline{D}_B \, \underline{u} \quad ,$$

$\underline{L}$ being a variable to be defined in a design process, and $\underline{u}$ being an input variable of the state observer (11).

6. Control device according to Claim 5, **characterized in that** a control voltage or an input current and/or a rotational angle of the wiper device (10) are/is used as input variables for the state observer (11).

7. Windscreen wiping apparatus, in particular for a motor vehicle, having a wiper device (10) and a control device (1) according to one of Claims 1 to 6.

8. Method for controlling a wiper device (10) of a windscreen wiping apparatus (2), in particular for a motor vehicle, a wiping arm (5) of the wiper device (10) oscillating within a wiping angle ($\alpha$) determined by two reversal positions (O, U), and a control device (1) undertaking an adjustment of a desired profile of the wiping arm (5) by means of an observer-based method,

   • there being stored in the control device (1) a mathematical system model (6) in which dynamic properties of the wiper device (10) are formulated, and in which a load torque of the wiping arm (5) is defined as a disturbance variable,
   • there being provided a state observer (11) which determines an estimated current load torque of the wiping arm (5) by means of the system model (6), **characterized in that**
   • the determined estimated load torque and changes in the same are evaluated at least shortly before the desired reversal positions (O, U), and on the basis of the evaluation the desired reversal position (O, U) is displaced either in the direction of a A-column (31) or in the direction of the middle of a windscreen, an amount by which this displacement is undertaken being dependent on a working point at which the wiping arm (5) is currently located.

9. Method according to Claim 8, **characterized in that** a system model (6) is used which takes account of dynamic properties, elasticities and moments of inertia of the wiper device (10).

10. Method according to Claim 9, **characterized in that** use is made in the system model (6) of a disturbance model (7) which uses a load torque acting on the wiping arm (5) as a disturbance variable.

**11.** Method according to Claim 10, **characterized in that** the load torque is determined from a drive signal (u) for the wiper device (10) and from an output signal (y) of the wiper device (10).

**12.** Method according to Claim 11, **characterized in that** the drive signal (u) is a voltage or current signal, and the output signal (y) is a rotational angle signal.

**13.** Method according to one of Claims 8 to 12, **characterized in that** the system model (6) can be described by the following relationship:

$$\dot{\underline{x}}_M = \underline{A}_M \, \underline{x} \; + \underline{B}_M \, \underline{u} \; + \underline{E} \, \underline{z} \quad,$$

$\underline{A}_M$ defining a dynamic matrix of the system model (6), $\underline{B}_M$ defining an input matrix of the system model (6), and $\underline{E}$ defining a matrix via which the disturbance variable acts on the system model (6).

**14.** Method according to one of Claims 10 to 13, **characterized in that** the disturbance model (7) can be described by the following system of equations:

$$\dot{\underline{x}}_S = \underline{A}_S \, \underline{x}_S$$

$$\underline{z} = \underline{C}_S \, \underline{x}_S \quad,$$

$\underline{A}_S$ defining a dynamic matrix of the disturbance model (7), $\underline{C}_S$ defining an output matrix of the disturbance model (7), and $\underline{z}$ defining the disturbance variable.

**15.** Method according to one of the preceding claims, **characterized in that** the state observer (11) can be described by the following system of equations:

$$\dot{\hat{\underline{x}}} = (\underline{A} \, - \, \underline{L} \, \underline{C}) \hat{\underline{x}} + \underline{B} \, \underline{u} \, + \underline{L} \, \underline{y}$$

$$\hat{\underline{y}}_B = \underline{C}_B \hat{\underline{x}} \, + \underline{D}_B \underline{u} \quad,$$

$\underline{L}$ being a variable to be defined in a design process, and $\underline{u}$ being an input variable of the state observer (11).

**16.** Method according to Claim 15, **characterized in that** a rotational speed and/or a wiping arm acceleration and/or an input current of the electric motor can be used as state variable of the system model (6).

**Revendications**

**1.** Dispositif de commande pour dispositif de balai (10) d'un ensemble d'essuie-glace (2), en particulier pour véhicule automobile,
le dispositif de commande (1) étant configuré pour commander une pendularité cyclique d'au moins un bras (5) du dispositif de balai (10) à l'intérieur d'un angle de balayage ($\alpha$) défini par deux positions de renvoi (O, U),
le dispositif de commande (1) assurant une adaptation du déplacement de consigne du bras de balai (5) au moyen d'un procédé soutenu par observateur,

un modèle mathématique de parcours (6) dans lequel des propriétés dynamiques du dispositif de balai (10) sont formulées et dans lequel un couple de charge du bras (5) de balai est défini comme grandeur perturbatrice étant placé dans le dispositif de commande (1),

un observateur d'état (11) qui détermine au moyen du modèle de parcours (6) un couple de charge instantané estimé du bras (5) de balai étant prévu, **caractérisé en ce que**

le couple de charge estimé ainsi déterminé et des modifications de ce dernier sont évalués au moins peu en avant des positions de consigne de renvoi (O, U),

**en ce que** sur base de l'évaluation, la position de consigne de renvoi (0, U) est déplacée soit en direction d'une colonne A (31) soit en direction du milieu de la vitre et

**en ce que** le niveau auquel le décalage est réalisé dépend d'un point de travail dans lequel le bras (5) de balai se trouve à cet instant.

2. Dispositif de commande selon la revendication 1, **caractérisé en ce qu'**un modèle de parcours (6) peut être représenté par l'équation ci-dessous :

$$\dot{x}_M = \underline{A}_M \, \underline{x} + \underline{B}_M \, \underline{u} + \underline{E} \, \underline{z}$$

dans laquelle $\underline{A}_M$ définit une matrice dynamique du modèle de parcours (6), $\underline{B}_M$ une matrice d'entrée du modèle de parcours (6) et $\underline{E}$ une matrice par l'intermédiaire de laquelle la grandeur perturbatrice agit sur le modèle de parcours (6).

3. Dispositif de commande selon les revendications 1 ou 2, **caractérisé en ce qu'**un modèle de perturbation (7) qui agit sur le modèle de parcours (6) est formulé dans le dispositif de commande (1).

4. Dispositif de commande selon la revendication 3, **caractérisé en ce que** le modèle de perturbation (7) peut être décrit par l'équation ci-dessous :

$$\dot{x}_S = \underline{A}_S \, \underline{x}_S, \quad \underline{z} = \underline{C}_S \, \underline{x}_S$$

dans laquelle $\underline{A}_S$ représente une matrice dynamique du modèle de perturbation (7), $\underline{C}_S$ une matrice de sortie du modèle de perturbation (7) et $\underline{z}$ la grandeur perturbatrice.

5. Dispositif de commande selon l'une des revendications précédentes, **caractérisé en ce que** l'observateur d'état (11) peut être décrit par les relations mathématiques suivantes :

$$\dot{\hat{x}} = (\underline{A} - \underline{L}\,\underline{C})\hat{x} + \underline{B}\,\underline{u} + \underline{L}\,\underline{y}$$

$$\underline{\hat{y}}_B = \underline{C}_B \, \underline{\hat{x}} + \underline{D}_B \, \underline{u}$$

dans lesquelles $\underline{L}$ est une grandeur à définir dans un processus de développement et $\underline{U}$ une grandeur d'entrée de l'observateur d'état (11).

6. Dispositif de commande selon la revendication 5, **caractérisé en ce qu'**il utilise comme grandeurs d'entrée de l'observateur d'état (11) une tension de commande ou un courant d'entrée et/ou l'angle de rotation du dispositif de balai (10).

7. Ensemble d'essuie-glace, en particulier pour un véhicule automobile, doté d'un dispositif de balai (10) et d'un dispositif de commande (1) selon l'une des revendications 1 à 6.

8. Procédé de régulation d'un dispositif de balai (10) d'un ensemble d'essuie-glace (2), en particulier d'un véhicule automobile, dans lequel un bras (5) de balai du dispositif de balai (10) se déplace pendulairement à l'intérieur d'un angle de balayage ($\alpha$) défini par deux positions de renvoi (0, U),

un dispositif de commande (1) assurant une adaptation du déplacement de consigne du bras (5) de balai au moyen d'un procédé soutenu par observateur,

un modèle mathématique de parcours (6) dans lequel des propriétés dynamiques du dispositif de balai (10) sont formulées et dans lequel un couple de charge du bras (5) de balai est défini comme grandeur perturbatrice étant placé dans le dispositif de commande (1),

un observateur d'état (11) qui détermine au moyen du modèle de parcours (6) un couple de charge instantané estimé du bras (5) de balai étant prévu, **caractérisé en ce que**

le couple de charge estimé ainsi déterminé et des modifications de ce dernier sont évalués au moins peu en avant des positions de consigne de renvoi (0, U),

**en ce que** sur base de l'évaluation, la position de consigne de renvoi (O, U) est déplacée soit en direction d'une colonne A (31) soit en direction du milieu de la vitre et

**en ce que** le niveau auquel le décalage est réalisé dépend d'un point de travail dans lequel le bras (5) de balai se trouve à cet instant.

9. Procédé selon la revendication 8, **caractérisé en ce qu'**il utilise un modèle de parcours (6) qui tient compte de propriétés dynamiques, d'élasticités et de moments d'inertie du dispositif de balai (10).

10. Procédé selon la revendication 9, **caractérisé en ce qu'**il utilise dans le modèle de parcours (6) un modèle de perturbation (7) qui utilise un couple de charge agissant sur le bras (5) de balai comme grandeur perturbatrice.

11. Procédé selon la revendication 10, **caractérisé en ce que** le couple de charge est déterminé à partir d'un signal de commande (U) du dispositif de balai (10) d'un signal de sortie (y) du dispositif de balai (10).

12. Procédé selon la revendication 11, **caractérisé en ce que** le signal de commande (U) est un signal de tension ou de courant et le signal de sortie (y) un signal d'angle de rotation.

13. Procédé selon l'une des revendications 8 à 12, **caractérisé en ce que** le modèle de parcours (6) peut être décrit par l'équation suivante :

$$\dot{x}_{\mathsf{M}} = \underline{A}_{\mathsf{M}}\,\underline{x} + \underline{B}_{\mathsf{M}}\,\underline{u} + \underline{E}\,\underline{z}$$

dans laquelle $\underline{A}_{\mathsf{M}}$ définit une matrice dynamique du modèle de parcours (6), $\underline{B}_{\mathsf{M}}$ une matrice d'entrée du modèle de parcours (6) et $\underline{E}$ une matrice par l'intermédiaire de laquelle la grandeur perturbatrice agit sur le modèle de parcours (6).

14. Procédé selon l'une des revendications 10 à 13, **caractérisé en ce que** le modèle de perturbation (7) peut être décrit par le système d'équation suivant :

$$\underline{\dot{x}}_{\mathsf{S}} = \underline{A}_{\mathsf{S}}\,\underline{x}_{\mathsf{S}}$$
$$\underline{z} = \underline{C}_{\mathsf{S}}\,\underline{x}_{\mathsf{S}}$$

dans lequel $\underline{A}_{\mathsf{S}}$ définit une matrice dynamique du modèle de perturbation (7), $\underline{C}_{\mathsf{S}}$ une matrice de sortie du modèle de perturbation (7) et $\underline{z}$ la grandeur perturbatrice.

15. Procédé selon l'une des revendications précédentes, **caractérisé en ce que** l'observateur d'état (11) peut être décrit par le système d'équations suivant :

$$\dot{\hat{x}} = (\underline{A} - \underline{L}\,\underline{C})\hat{x} + \underline{B}\,\underline{u} + \underline{L}\,\underline{y}$$

$$\hat{\underline{y}}_B = \underline{C}_B\,\hat{\underline{x}} + \underline{D}_B\,\underline{u}$$

dans lesquelles $\underline{L}$ est une grandeur à définir dans un processus de développement et $\underline{U}$ une grandeur d'entrée de l'observateur d'état (11).

**16.** Procédé selon la revendication 15, **caractérisé en ce qu'**il peut utiliser comme grandeurs d'état du modèle de parcours (6) une vitesse de rotation, l'accélération du bras de balai et/ou un courant d'entrée du moteur électrique.

$$\hat{\underline{y}}_B = \underline{C}_B\,\hat{\underline{x}} + \underline{D}_B\,\underline{u}$$

**Fig. 1**

EP 1 321 338 B1

Fig. 2

Fig. 3

EP 1 321 338 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0700342 B1
- US 6150783 A
- EP 1300304 A2
- US 5757155 A

**In der Beschreibung aufgeführte Nicht-Patentliteratur**

- **GERD SCHULZ.** Regelungstechnik. Oldenbourg Verlag, 121ff